# EUROPÄISCHE PATENTSCHRIFT

(11) **EP 0 889 201 B1**
(45) Veröffentlichungstag und Bekanntmachung des Hinweises auf die Patenterteilung: **15.01.2003**
(21) Anmeldenummer: 97810441.2
(22) Anmeldetag: 03.07.1997
(51) Int. Cl.: F01D 5/18

(54) **Prallanordnung für ein konvektives Kühl-oder Heizverfahren**
Impingement arrangement for a convective cooling or heating process
Ensemble des jets d'air pour un procédé de chauffage ou de refroidissement par convection

(43) Veröffentlichungstag der Anmeldung: 07.01.1999
(73) Patentinhaber: ALSTOM (Switzerland) Ltd, 5401 Baden (CH)
(72) Erfinder: Anderson, Gordon, CH-5400 Baden (CH); Ferber, Jörgen, D-79790 Küssaberg (DE); Höcker, Rainer, Dr., D-79761 Waldshut (DE); Tarada, Fathi, Dr., CH-3122 Kehrsatz (CH); Weigand, Bernhard, Dr., D-79761 Waldshut (DE)

(56) Entgegenhaltungen:
- DE-A- 4 430 302
- US-A- 5 321 951
- D. SCHMIDT: "Vorarbeiten zur Berechnung und experimrntellen Untersuchung von effusionsgekülten Gasturbinenschaufeln" M.T.Z. MOTORTECHNISCHE ZEITSCHRIFT, Bd. 35, Nr. 3, März 1974, Seiten 72-79, XP002046351

## Beschreibung

### Technisches Gebiet

Die Erfindung bezieht sich auf eine *Prallanordnung für ein konvektives Kühl- oder Heizverfahren* gemäss Oberbegriff des unabhängigen Patentanspruchs.

Unter den konvektiven Kühl- *oder* Heizverfahren können mit Prallkühlung respektive Prallheizung die höchsten Wärmeübergangszahlen erreicht werden. Realisiert wird die Prallströmung dadurch, dass ein Kühl- oder Heizfluid (z.B. Luft, Wasser, Wasserdampf, Wasserstoff, flüssiges Natrium usw.) durch eine oder mehrere Öffnungen in einer Wand strömt und mehr oder weniger senkrecht auf eine gegenüberliegende Fläche aufprallt. Beim Auftreffen auf die Prallfläche werden die Prallstrahlen umgelenkt und es bildet sich eine Strömung parallel zur Prallfläche aus, wodurch ein hoher Wärmeübergang zwischen Strömung und Wand erzielt wird. Zur Vergrösserung der wärmeübertragenden Fläche ist es bekannt, diese mit Rauhigkeitselementen, meistens in Form von Rippen, zu versehen.

### Stand der Technik

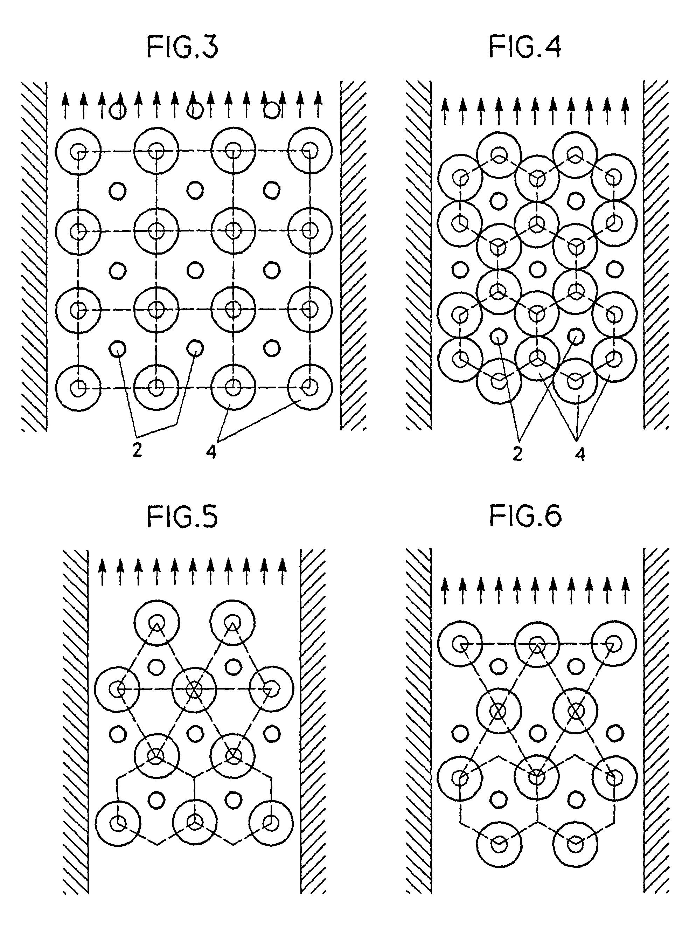

Eine Prallkühlung der eingangs genannten Art ist bekannt aus der DE-A1 44 30 302. Die dort dargestellte Methode zeichnet sich durch eine Mehrzahl von Prallrohren aus, die mit ihrem Einlauf flächenförmig auf einem ebenen oder gekrümmten Träger angeordnet sind und mit ihrer Mündung gegen den zu kühlenden Wandteil gerichtet sind, wobei der Träger mit Abstand zum Wandteil angeordnet ist. Die Prallfläche des zu kühlenden Wandteils ist bei einem Ausführungsbeispiel (Fig.3) als Relief ausgebildet, wobei die Strahlen direkt auf hervorstehende Buckel auftreffen. Damit soll die inhomogene Wärmeübertragung in den Prallstrahlen ausgeglichen und eine homogene Temperaturverteilung auf der heissen Seite des Wandteiles erzielt werden. Die Buckel sind bei dieser Anordnung im wesentlichen als Zylinder ausgebildet mit herstellungsbedingt abgerundeten Kanten. Bei einem weiteren Ausführungsbeispiel (Fig.4) liegt das Relief in Fom von Rippen vor. Beide Geometrien haben in Bezug auf den Wärmeübergang keine vorteilhaften thermischen Randbedingungen. Die Wärme, die über die Oberfläche eines aus der zu kühlenden Wand hervorstehenden Elementes abgegeben werden kann, muss zunächst einmal durch dessen Grundfläche und das Material an die Oberfläche geleitet werden. Dadurch stellt sich im Material des Elementes eine Temperaturschichtung ein. Diese kann je nach Material und Geometrie dazu führen, dass an den am weitesten von der Basis des Elementes entfernten Stellen die Temperaturdifferenz zwischen Fluid und Element so klein wird, dass praktisch keine Wärmeübertagung mehr stattfindet.
*Eine andere Variante der Gestaltung der Prallfläche ist aus US 5321951 ersichtlich. Hier treffen die Prallstrahlen auf eine Oberfläche mit einer Vielzahl von halbkugelförmigen Vorsprüngen (Fig. 5B,C), deren Aufgabe es ist, zum einen die für den Wärmeübergang zur Verfügung stehende Oberfläche zu erhöhen und zum anderen die Turbulenz des abströmenden Kühlfluids zu erhöhen.*

### Darstellung der Erfindung

Der Erfindung liegt die Aufgabe zugrunde, eine Prallanordnung zu schaffen, bei welcher die buckligen Rauhigkeitselemente bezüglich des Herstellungsprozesses und der thermischen Wirksamkeit optimiert sind. Ausgehend von den oben erwähnten bekannten Buckeln sind hierzu sowohl die Geometrie als auch deren Grösse und Anordnung relativ zu den *Prall*strahlen zu berücksichtigen.

Erfindungsgemäss wird dies bei einer Prallanordnung der eingangs genannten Art mit den kennzeichenden Merkmalen des Patentanspruchs 1 erreicht. Günstige Weiterbildungen der Erfindung ergeben sich aus den Unteransprüchen.

Die Vorteile der neuen Massnahme sind unter anderem darin zu sehen, dass infolge der nahezu isothermen Oberfläche eine hohe Pin-Effektivität erzielt wird und dass auch an den nicht parallel zur mit den Prallstrahlen zu beaufschlagenden Wand gerichteten Flächen ein hoher Wärmeübergang vorliegt. Darüber hinaus ist wegen des Fehlens von scharfen Kanten und kleinen Radien mit einer einfachen und kostengünstigen Fertigung zu rechnen. Die Geometrie ist leicht auszuformen und damit gut giessbar; sie ist fehlertolerant und gestattet grosse Masstoleranzen. Infolge der Symmetrie der Buckel ist deren Anordnung unabhängig von der Anströmung durch das umgelenkte Prallmittel. Schliesslich haben die neuen Buckel-Elemente auch niedrige Druckverluste zur Folge.

Zudem können die Buckel-Elemente als Abstandshalter für die strahlerzeugende Platte benutzt werden, wenn diese auf den Buckeln aufliegt. Zwar ist diese Massnahme an sich bekannt, jedoch ergeben sich aufgrund der speziellen Konfiguration der Buckelberge hier kaum Einbussen in der wärmeübertragenden Fläche.

### Kurze Beschreibung der Zeichnung

In der Zeichnung sind mehrere Ausführungsbeispiele der Erfindung vereinfacht dargestellt. Es zeigen:
- Fig. 1: einen Längsschnitt durch eine Prallanordnung;
- Fig. 2: die Geometrie eines Buckel-Elementes ;
- Fig. 3: eine Vierer-Anordnung in von Buckel-Elementen;
- Fig. 4: eine Sechser-Anordnung von Buckel-Elementen;
- Fig. 5: eine Dreier-Anordnung von Buckel-Elementen;
- Fig. 6: eine Variante der Dreier-Anordnung gemäss Fig. 5;
- Fig. 7: eine prallgekühlte Gasturbinenschaufel;
- Fig. 8: ein Ausführungsbeispiel mit Prallrohren statt Prallöffnungen.

Es sind nur die für das Verständnis der Erfindung wesentlichen Elemente gezeigt. In den verschiedenen Figuren sind funktionsgleiche Elemente mit denselben Bezugszeichen versehen. Die Strömungsrichtungen der Medien sind mit Pfeilen bezeichnet.

### Weg zur Ausführung der Erfindung

Nachstehend wird die Prallströmung als Prallkühlung bezeichnet, wie sie beispielsweise zur Kühlung von umströmten heissen Turbomaschinen-Komponenten, wie Gasturbinenschaufeln oder Brennkammerwandungen, Anwendung finden kann.

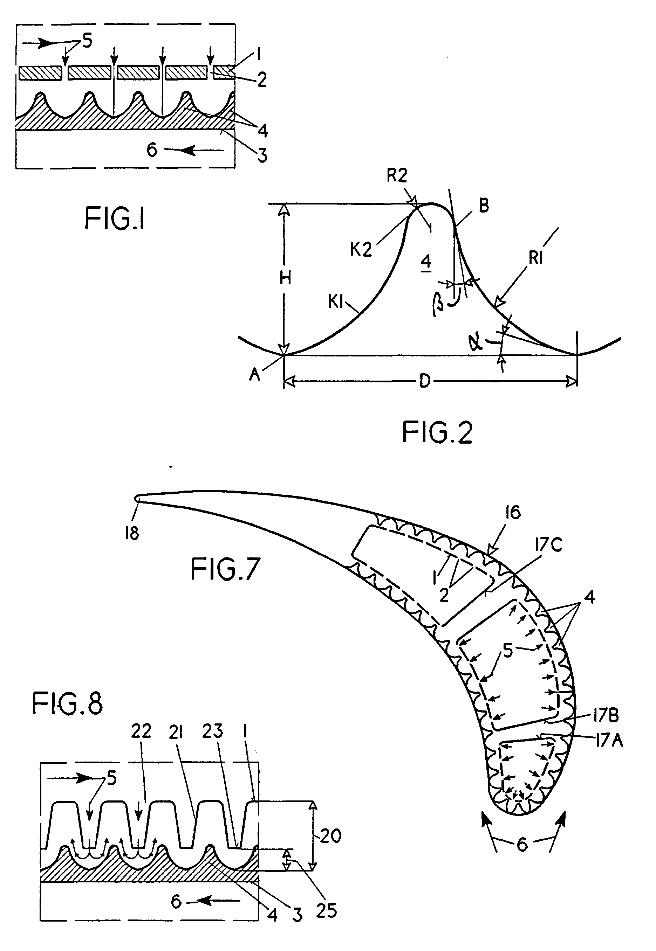

In Fig. 1 ist das beispielsweise mittels Kühlluft zu kühlende Wandteil mit 3 bezeichnet. Es handelt sich hier um eine ebene Wand, welche auf der Aussenseite von einem durch die Pfeile 6 bezeichneten heissen Medium umströmt wird. Entsprechend eben ist auch der kühlluftseitige Träger 1 ausgebildet. Er ist im gezeigten Fall mit gleichbleibendem Abstand 20 mittels geeigneter, nicht dargestellter Mittel an der Wand befestigt. Der Träger 1 weist eine Mehrzahl von Prallöffnungen 2 auf und kann als einfaches Lochblech konzipiert sein. Auf der Innenseite der zu kühlenden Wand sind eine Anzahl Buckel-Elemente 4 um die Prallfläche des Prallstrahles 5 herum angeordnet. Diese Buckel-Elemente 4 sind vorzugsweise mit dem Wandteil 3 vergossen. Es versteht sich, dass diese Buckel-Elemente 4 auch als Abstandhalter zwischen zu kühlender Wand 3 und Träger 1 benutzt werden können. In diesem Falle entspricht die Höhe (H) der Elemente 4 dem Abstand 20 und die Buckelberge sind zweckmässigerweise an ihrem äussersten Punkt mit dem Träger 1 verbunden.

In Fig. 2 ist die Geometrie eines solchen Buckel-Elementes 4 erläutert. Sofern das Element 4 symmetrisch aufgebaut ist, besteht es nicht nur an der dem Prallstrahl zugekehrten Fläche aus zwei ineinanderübergehenden Krümmungen K1, K2, sondern in jedem beliebigen Längsquerschnitt. Die gewählte Geometrie beeinflusst den Wärmestrom derart, dass die Oberflächentemperatur mit zunehmendem Abstand von der Basis nur unwesentlich abnimmt und somit ein nahezu konstanter Wärmestrom durch die gesamte Oberfläche fliessen kann.

Der Radius R2 der Krümmung K2 des Buckelberges sollte gleich dem minimalen realisierbaren Radius sein, was letztlich von der gewählten Fertigungsart abhängt. Der Radius der Krümmung K1, welche in die zu kühlende Prallfläche des Wandteiles 3 ausläuft, sollte hingegen möglichst gross gewählt werden und zwar derart, dass das Kreissegment eine Kurve der Form x ∼ √y möglichst gut approximiert, *wobei x die Ebene parallel zum Wandteil (3) und y die Ebene senkrecht zum Wandteil (3) symbolisiert*. Die beiden Krümmungen haben in ihrem Schnittpunkt B eine gemeinsame Tangente, die mit der Senkrechten zum Wandteil 3 einen Winkel β einschliesst. Dessen Wert soll so klein wie möglich gewählt werden. Die an der Basis im Punkt A endende Krümmung bildet mit der Grundfläche den Winkel α. Dessen Wert ergibt sich aus der Konstruktion unter Erfülllung der obengenannten Kriterien, wenn die Höhe H des Buckel-Elementes gegeben ist und der Wert für den Basisdurchmesser D so gross wie möglich gewählt wird. Dies ist der Fall, wenn sich benachbarte Buckel-Elemente 4 an der Basis in Punkt A berühren. *Damit unterscheidet sich das neue Buckel-Element 4 massgeblich von den bekannten Rauhigkeitselementen, bei denen eine solche Anordnung nicht möglich ist, da ansonsten die zwangsläufig auftretenden Querströmungen beeinträchtigt würden. Dennoch lässt sich mit der neuen, vorstehend beschriebenen Geometrie bei gleicher Bauhöhe die wirksame Oberfläche um etwa den gleichen Betrag erhöhen wie bei den bekannten Elementen*.

Da infolge dieser Geometrie überall eine ausreichende Temperaturdifferenz gewährleistet ist, kann die gesamte Oberfläche Wärme übertragen. Darüber hinaus ist der Wärmeübergangskoeffizient auf der Oberfläche etwa gleich demjenigen, der auf der Basisfläche ohne das Buckel-Element 4 vorherrschen würde. Dies wiederum im Gegensatz zu den bekannten Elementen mit senkrecht zur Wand verlaufenden Flächen, bei denen mit erheblich reduziertem Wärmeübergangskoeffizient zu rechnen ist.

Aufgrund der neuen Geometrie der Buckel-Elemente 4 sind nun mehrere unterschiedliche Anordnungsmöglichkeiten gegeben, die in Funktion der gewünschten Wärmeübertragung und/oder der tolerierbaren Druckverluste auszuwählen sind.

Bezogen auf die Querströmung im Bereich der Basis lassen sich grundsätzlich zwei Anordnungen unterscheiden. Dies unter der Voraussetzung, dass im Gegensatz zur eingangs erwähnten bekannten Lösung der Prallstrahl 5 nicht direkt auf das Buckel-Element 4 auftreffen soll.

Die Prallöffnungen 2 können im Verbund entweder in Reihe angeordnet sein gemäss Fig. 3 oder sie können gegeneinander versetzt sein, beispielsweise um eine halbe Teilung gemäss Fig. 4. Daraus resultiert ein wärmeübertragender Flächenanteil pro Prallstrahl 5, der entweder quadratisch oder sechseckig ist, wie die gestrichelten Linien in den Fig. 3 resp. 4 zeigen.

Vorzugsweise werden die Buckel-Elemente 4 an den Kreuzungspunkten dieser gestrichelten Linen angeordnet. Wie Fig. 3 zeigt, ist in der Reihenanordnung jeder Prallstrahl 5 von maximal vier Buckel-Elementen 4 umgeben. In der versetzten Anordnung können es höchstens sechs Buckel-Elemente 4 sein, die den Prallstrahl 5 umgeben. Legt man genau die gleiche Grösse der Buckel-Elemente 4 in beiden Fällen zugrunde, so ist nach Fig. 4 erkennbar, dass bei 6 Elementen der Fall eintritt, dass sie sich an der Basis berühren.

Es empfiehlt sich, in der Reihenanordnung alle 4 Kreuzungspunkte um einen Prallstrahl 5 herum zu besetzen. Bei der versetzten Anordnung mit 6 Kreuzungspunkten sind indes zwei weitere Varianten sinnvoll. Bei diesen ist jeweils nur die Hälfte der Kreuzungspunkte mit Buckel-Elementen 4 besetzt zur Bildung eines Dreieckes, in dessen Zentrum der *Prall*strahl 5 auf die Wand 3 auftritt. Hierbei kann je nach Erfordernissen die Spitze des Dreieckes in Richtung Querströmung, d.h. Abströmung liegen, die Querströmung trifft dann direkt auf das stromabliegende Buckel-Element 4, wie aus Fig. 5 erkennbar. Die Spitze des Dreieckes kann jedoch der Querströmung, d.h. der Abströmung entgegengerichtet sein, was bedeutet, dass die Querströmung zunächst durch eine Lücke zwischen 2 Buckel-Elementen hindurchströmt. Dieser Fall ist in Fig. 6 dargestellt.

In Fig. 7 ist als Beispiel eines zu kühlenden Bauteils eine Gasturbinenschaufel 16 gezeigt. Die Träger 1 mit den Prallöffnungen 2 sind als mehr oder weniger rohrförmige Einsätze 17A, 17B und 17C konzipiert und im hohlen Inneren der Schaufel 16 angeordnet. Diese Einsätze sowie die mit den Buckel-Elementen 4 versehene Schaufelwand können als Gussteil ausgeführt sein. Sie können desgleichen als drucktragenes Gebilde ausgestaltet sein für Innendrücke, die bis zum Doppelten des in der eigentlichen Prallzone herrschenden Druckes betragen können.

Im Falle einer Leitschaufel erfolgt die Einströmung des Kühlmittels in die Einsätze in der Regel vom Schaufelfuss her gegen die Schaufelspitze hin. Die Prallöffnungen 2 und die Buckel-Elemente 4 sind über die Schaufelhöhe und den Schaufelumfang in erforderlichem Abstand zueinander gestaffelt. Die Einsätze 17A-C können vom Kühlmittel einzeln oder in Serie durchströmt werden.

Das gas- oder dampfförmige Kühlmedium kann in den mehreren Einsätzen 17A-C im geschlossenen Kreis zirkuliert werden, das heisst, es wird nach vollzogener Kühlung wieder über den Schaufelfuss abgezogen. Das von den gekühlten Wandteilen abströmende Kühlmedium kann jedoch aus der Schaufel 16 heraus in den Strömungskanal austreten. Dies geschieht vorzugsweise an jener Stelle der Schaufel 16, an welcher der tiefste Aussendruck vorherrscht. In der Regel wird man das Kühlmittel somit an der Hinterkante 18 der Schaufel 16 austreten lassen.

Fig. 8 zeigt ein Ausführungsbeispiel, bei welchem der Träger 1 ebenfalls flächenförmig ist und mit einer Vielzahl, hier äquidistanter und in Reihen angeordneter Prallrohre 21 versehen ist. Deren Einlauf 22 entspricht einer Prallöffnung und ist bündig mit der Trägeroberfläche. Die Prallrohre 21 weisen einen konischen Innenkanal mit stetiger Verengung in Strömungsrichtung auf. Der engste Querschnitt der Prallrohre 21 liegt damit an der Mündung 23. Mit ihrer Mündung 23 sind die Prallrohre 21 senkrecht gegen das zu kühlende Wandteil 3 gerichtet. Die Mündung befindet sich im Prallabstand 25 zur Wand. Im Beispielsfall beträgt das Verhältnis dieses Prallabstandes zum engsten Durchmesser der Prallrohre 21 etwa 1. Es ist ersichtlich, dass die nach dem Aufprall abgelenkte Kühlluft in die freien Zwischenräume zwischen den Prallrohren 21 abströmen kann, ohne dabei benachbarte Prallstrahlen 5 zu stören. Das lichtfreie Mass des Zwischenraumes ist bei senkrechter Ausrichtung der Prallrohre 21 durch deren Länge gegeben. Im Gegensatz zu den Kühlluftstrahlen, die über ein Lochblech erzeugt werden, bietet diese Lösung den Vorteil der freien Gestaltung des Verhältnisses von Strahlabstand zum Strahldurchmesser, welches sich durchaus über einen Bereich von 0,1 bis 4 erstrecken kann.

Selbstverständlich ist die Erfindung nicht auf die gezeigten und beschriebenen Beispiele beschränkt. Es versteht sich, dass je nach Erfordernissen die Anzahl und Teilung der Prallöffnungen 2 oder-rohre 21, sowie Länge und Form der letzteren fallweise optimiert werden können. Auch in der Wahl des Kühlmittels, dessen Druckes und dessen Weiterverwendung nach der Kühltätigkeit setzt die Erfindung keine Schranken.
Schliesslich wird der Fachmann erkennen, dass die Erfindung nicht nur zum Zwecke der Kühlung von Wandteilen von Maschinen, Apparaten oder allgemein Anlagen angewendet werden kann, sondern genau so gut zu deren Heizung. Beispiele für eine solche Anwendung des flächigen Heizens bilden z.B. das Trocknen von Papier, das Schmelzen und Verkleben von Kunststoffen, das Enteisen von Tragflügeln an Flugzeugen usw.

### Bezugszeichenliste

- 1: Träger
- 2: Prallöffnung
- 3: Wandteil
- 4: Buckel-Element
- 5: Kühlluft
- 6: Heissgas
- D: Basisdurchmesser des Buckel-Elementes
- H: Höhe des Buckel-Elementes
- K1: grosser Krümmungsabschnitt
- K2: kleiner Krümmungsabschnitt
- R1: Radius des Krümmungsabschnittes K1
- R2: Radius des Krümmungsabschnittes K2
- B: Schnittpunkt der Krümmungsabschnitte K1+K2
- A: Schnittpunkt des des Krümmungsabschnittes K1 mit Basis
- 16: Gasturbinenschaufel
- 17A,B,C: Einsatz
- 18: Hinterkante
- 20: Trägerabstand
- 21: Prallrohr
- 22: Einlauf
- 23: Mündung
- 25: Prallabstand

## Patentansprüche

1. *Prallanordnung für ein konvektives Kühl- oder Heizverfahren, im wesentlichen umfassend einen* eine Mehrzahl von flächenförmig verteilten Prallöffnungen (2) aufweisenden ebenen oder gekrümmten Träger (1) und davon beabstandet ein mit einer Prallströmung beaufschlagtes Wandteil (3), dessen zu kühlende oder aufzuheizende Prallfläche als buckelförmiges Relief ausgebildet ist, *mit Buckel-Elementen (4), die Rotationskörper sind und deren bildende Kurve im wesentlichen aus zwei ineinanderübergehenden Krümmungen (K1, K2) besteht,* **dadurch gekennzeichnet, dass** die Buckel-Elemente (4) *derartig um die Prallöffnungen (2*) herum angeordnet sind, *dass die Prallstrahlen stets zwischen den Buckel-Elementen (4) auftreffen*.

2. *Prallanordnung für ein konvektives Kühl- oder Heizverfahren* nach Anspruch 1, **dadurch gekennzeichnet, dass** die in die Prallfläche des Wandteiles (3) unter einem Winkel (α) auslaufende Krümmung (K1) des Buckel-Elementes (4) einen Radius (R1) aufweist, der zumindestens annähernd eine Kurve der Form x ∼ √y umschreibt.

3. *Prallanordnung für ein konvektives Kühl- oder Heizverfahren* nach Anspruch 2, **dadurch gekennzeichnet, dass** die Basis (D) der Buckel-Elemente (4) so bemessen ist, dass sich benachbarte Elemente an der Basis (D) berühren.

4. *Prallanordnung für ein konvektives Kühl- oder Heizverfahren* nach Anspruch 3, **dadurch gekennzeichnet, dass** die Buckel-Elemente an ihrem äussersten Punkt mit dem Träger (1) verbunden sind.

5. *Prallanordnung für ein konvektives Kühl- oder Heizverfahren* nach Anspruch 1, **dadurch gekennzeichnet, dass** der zu kühlende oder aufzuheizende Wandteil (3) zusammen mit den Buckel-Elementen (4) als Gussteil ausgeführt ist.

6. *Prallanordnung für ein konvektives Kühl- oder Heizverfahren* nach Anspruch 1, **dadurch gekennzeichnet, dass** die Prallöffnungen (2) den Einlauf (22) von Prallrohren (21) bilden, deren Mündung (23) gegen den zu kühlenden oder aufzuheizenden Wandteil (3) gerichtet ist.

7. *Prallanordnung für ein konvektives Kühl- oder Heizverfahren* nach Anspruch 1 oder 6, **dadurch gekennzeichnet, dass** die Buckel-Elemente (4) symmetrisch um den Prallstrahl herum verteilt sind.

## Claims

1. Impact arrangement for a convective cooling or heating method, essentially comprising a plane or curved carrier (1) having a plurality of impact orifices (2) distributed in a sheet-like manner and, at a distance from the said carrier, a wall part (3) which is acted upon by an impact flow and of which the impact surface to be cooled or to be heated is produced as a boss-shaped relief, with boss elements (4) which are bodies of revolution and the forming curve of which consists essentially of two curves (K1, K2) merging one into the other, **characterized in that** the boss elements (4) are arranged around the impact orifices (2) in such a way that the impact jets always impinge between the boss elements (4).

2. Impact arrangement for a convective cooling or heating method according to Claim 1, **characterized in that** that curve (K1) of the boss element (4) which runs out into the impact surface of the wall part (3) at an angle (α) has a radius (R1) which at least approximately circumscribes a curve of the form x ∼ √y.

3. Impact arrangement for a convective cooling or heating method according to Claim 2, **characterized in that** the base (D) of the boss elements (4) is dimensioned such that adjacent elements touch one another at the base (D).

4. Impact arrangement for a convective cooling or heating method according to Claim 3, **characterized in that** the boss elements are connected to the carrier (1) at their outermost point.

5. Impact arrangement for a convective cooling or heating method according to Claim 1, **characterized in that** the wall part (3) to be cooled or to be heated is produced, together with the boss elements (4) as a casting.

6. Impact arrangement for a convective cooling or heating method according to Claim 1, **characterized in that** the impact orifices (2) form the inlet (22) of impact tubes (21), the mouth (23) of which is directed towards the wall part (3) to be cooled or to be heated.

7. Impact arrangement for a convective cooling or heating method according to Claim 1 or 6, **characterized in that** the boss elements (4) are distributed symmetrically around the impact jet.

## Revendications

1. Ensemble des jets d'air pour un procédé de refroidissement ou de chauffage par convection, comprenant essentiellement un support plan ou courbe (1) présentant une pluralité d'ouvertures à jets (2) distribuées en une surface et une partie de paroi (3) espacée de celui-ci et soumise à un écoulement par jets, dont la face d'impact à refroidir ou à chauffer est configurée en relief en forme de bosses, avec des éléments de bosses (4), qui sont des corps de révolution et dont la courbe génératrice se compose essentiellement de deux courbes qui se prolongent mutuellement (K1, K2), **caractérisé en ce que** les éléments de bosses (4) sont disposés autour des ouvertures à jets (2) d'une manière telle que les jets frappent toujours entre les éléments de bosses (4).

2. Ensemble des jets d'air pour un procédé de refroidissement où de chauffage par convection suivant la revendication 1, **caractérisé en ce que** la courbe (K1) de l'élément de bosse (4), qui se termine dans la face d'impact de la partie de paroi (3) sous un angle (α), présente un rayon de courbure (R1), qui décrit au moins approximativement une courbe de la forme x ∼ √y.

3. Ensemble des jets d'air pour un procédé de refroidissement ou de chauffage par convection suivant la revendication 2, **caractérisé en ce que** la base (D) des éléments de bosses (4) est dimensionnée de telle façon que des éléments voisins se touchent sur la base (D).

4. Ensemble des jets d'air pour un procédé de refroidissement ou de chauffage par convection suivant la revendication 3, **caractérisé en ce que** les éléments de bosses sont assemblés au support (1) par leur point le plus extérieur.

5. Ensemble des jets d'air pour un procédé de refroidissement ou de chauffage par convection suivant la revendication 1, **caractérisé en ce que** la partie de paroi à refroidir ou à chauffer (3) est une pièce coulée réalisée avec les éléments de bosses (4).

6. Ensemble des jets d'air pour un procédé de refroidissement ou de chauffage par convection suivant la revendication 1, **caractérisé en ce que** les ouvertures à jets (2) forment l'entrée (22) de tubes à jets (21), dont l'embouchure (23) est dirigée vers la partie de paroi à refroidir ou à chauffer (3).

7. Ensemble des jets d'air pour un procédé de refroidissement ou de chauffage par convection suivant la revendication 1 ou 6, **caractérisé en ce que** les éléments de bosses (4) sont répartis de façon symétrique autour du jet.
